# EUROPEAN PATENT SPECIFICATION

(11) **EP 4 448 991 B1**
(45) Date of publication and mention of the grant of the patent: **07.10.2026**
(21) Application number: 22823114.8
(22) Date of filing: 13.12.2022
(51) Int. Cl.: F16H 63/32, F16H 61/30

(54) **GEAR-CHANGE SELECTOR MODULE FOR A GEARSHIFT**
GANGSCHALTUNGSAUSWAHLMODUL FÜR EINE GANGSCHALTUNG
MODULE SÉLECTEUR DE CHANGEMENT DE VITESSE POUR LEVIER DE VITESSES

(30) Priority: 14.12.2021 DE 102021133066
(43) Date of publication of application: 23.10.2024
(73) Proprietor: Valeo Powertrain GmbH, 96106 Ebern (DE)
(72) Inventor: SCHORN, Andreas, 96106 Ebern (DE); BERGER, Ralph, 96106 Ebern (DE); PARK, Ho-Seon, 96106 Ebern (DE); MÜLLER, Karlheinz, 96106 Ebern (DE); GRIMMER, Dieter, 96106 Ebern (DE)
(74) Representative: Valeo Powertrain Systems
(86) International application number: PCT/EP2022/085499
(87) International publication number: WO 2023/110803

(56) References cited:
- JP-B2- 5 280 311
- US-B2- 7 950 323

## Description

The invention concerns a gear-change selector module for a gearshift of a motor vehicle, with a housing, a movable element and a shift fork having a carrier arm which engages in a recess of the movable element.

Gear-change selector modules are parts of a transmission mechanism. They serve to create the adjustment movement for shifting between different gears of the transmission. Normally, gear-change selector modules contain several movable elements which can be moved into receivers under hydraulic or electromechanical actuation in order to engage different gears. The stroke of this movable element is transmitted to different shift forks, which are coupled to shift collars of the transmission, in order to move these axially. In this way, different gear stages are activated or deactivated. The shift forks are coupled to the movable elements via carrier arms which engage in recesses in the movable elements. The force is transmitted via carrier faces of the carrier arms which lie against actuating faces of the recesses.

Document US7950323B2, on which the two-part form is based, describes a shifting device for a motor vehicle transmission that utilizes a hydraulic shift cylinder containing a piston. The piston rod is connected directly to a shift element, such as a shift rocker, in a detachable manner.

Document JP5280311B2 describes a shift actuator featuring a first piston and a second piston arranged on the same axis within a single cylinder. A shift operation member, such as a shift fork, is inserted through an opening and positioned between these two pistons. Fluid pressure drives one of the pistons to push the member and actuate a shift.

During operation of the gear-change selector modules, the carrier arms of the shift forks deform on actuation due to the unavoidable material elasticity. This leads to a tilt moment on the movable element which pushes the movable element out of its coaxial position with the receiver and hence causes a greater wear on the contact faces between the movable element and the receiver. Also, with hydraulically actuated movable elements, because of the asymmetric load, the tilt moment has a negative effect on the tightness of the seals of the movable element, in particular at low temperatures.

It is an object of the invention to provide a gear-change selector module which avoids an uneven load of the movable element and hence tilt moments acting on the movable element.

This object is achieved by a gear-change selector module for a gearshift of a motor vehicle according to claim 1.

Preferred embodiments of the present invention are laid down in the dependent claims.

It has been found that, in contrast to the prior art in which the actuating faces and carrier faces are flat or level, with the gear-change selector module configured according to the claimed invention, the tilt moments acting on the movable element in operation are reduced. The curved actuating and carrier faces here ensure in particular that the contact faces can roll on one another and thereby the theoretical contact point wanders very much less in the radial direction on deformation of the carrier arm than is the case with contact faces which are flat in the starting state. Because of the rolling, the forces are transmitted from the actuating faces in the movable element to the carrier faces of the carrier arm mainly centrally, i.e. in the region of the centre axis.

Viewed in a section running through the centre axis of the movable element and the centre axis of the recess, the first portions of the actuating faces may each have a first radius of less than 50 mm. In this way, it is guaranteed that the carrier arm has enough clearance to bend in the first portions when the shift fork is actuated.

In one embodiment, the first radius is between 10 mm and 34 mm, in particular between 20 mm and 24 mm. This ensures that the carrier faces in the first portion always lie against the actuating faces in defined fashion in order to avoid tilt moments.

In a further embodiment, viewed in a section running through the centre axis of the movable element and the centre axis of the recess, the first portions of the carrier faces are each concave and have a radius which is at least as great as the first radius. In the sense of the invention, at least one of the first portions of the carrier faces may have a radius which tends towards infinity, so that the associated first portion is substantially flat. This has the advantage that in the first portions, the carrier arm can bend under load such that tilt moments have no effect or only a slight effect on the movable element.

It may furthermore be provided that, viewed in a section running through the centre axis of the movable element and the centre axis of the recess, the second portions of the carrier faces each have a second radius of less than 200 mm. Thus in the second portions, the carrier arm has sufficient clearance to bend on actuation of the shift fork.

In one embodiment, the second radius may be between 50 mm and 140 mm, in particular between 90 mm and 100 mm. This design ensures that the carrier faces in the first portion always lie on the actuating faces in defined fashion in order to avoid tilt moments.

According to one embodiment, viewed in a section running through the centre axis of the movable element and the centre axis of the recess, the actuating faces are each flat in a second portion extending from the centre axis away from the first portion of the actuating faces, in particular perpendicular to the centre axis of the movable element. Thus the clearance between the actuating faces and the carrier faces in the second portion is sufficiently large to avoid tilt moments when the shift fork bends during actuation.

According to one embodiment, viewed in a section running through the centre axis of the movable element and the centre axis of the recess, the centre axis of the movable element intersects the carrier faces such that the radial extent of the first portion of the carrier face amounts to maximum 500% of the radial extent of the second portion of the corresponding carrier face. This ensures that the carrier arm protrudes into the recesses sufficiently far beyond the centre axis of the movable element that the forces are reliably transmitted from the actuating faces centrally to the carrier faces when the shift fork is actuated by means of the movable element.

Alternatively or additionally, viewed in a section running through the centre axis of the movable element and the centre axis of the recess, the actuating faces may each have a second portion. Here, viewed in a section running through the centre axis of the movable element and the centre axis of the recess, the centre axis of the movable element intersects the actuating faces such that the radial extent of the first portion of the actuating face amounts to maximum 300% of the radial extent of the second portion of the corresponding actuating face. Thus the actuating faces are arranged relative to the centre axis such that sufficient contact area is available for the carrier faces both in the first portions and in the second portions, in order to reliably ensure that the actuating forces are transmitted centrally.

Furthermore, it may be provided that, viewed in a section running through the centre axis of the movable element and the centre axis of the recess, the actuating faces each have a second portion. Here, the first portion of the actuating faces and carrier faces transforms into the second portion of the corresponding actuating face or carrier face without an edge or step. Thus it is ensured that the forces acting on the movable element during operation do not change suddenly when the shift fork bends, and thereby cause a change of the regions in which the carrier faces lie against the actuating faces.

Further advantages and features will become apparent from the following description and from the appended drawings, in which:
- Figure 1 shows a perspective illustration of a gear-change selector module according to the invention with several movable elements and shift forks,
- Figure 2 shows a section through a movable element and a shift fork coupled to the movable element of the gear-change selector module from figure 1, and
- Figure 3 shows, in a detail view of figure 2, a carrier arm of the shift fork which engages in a recess of the movable element.

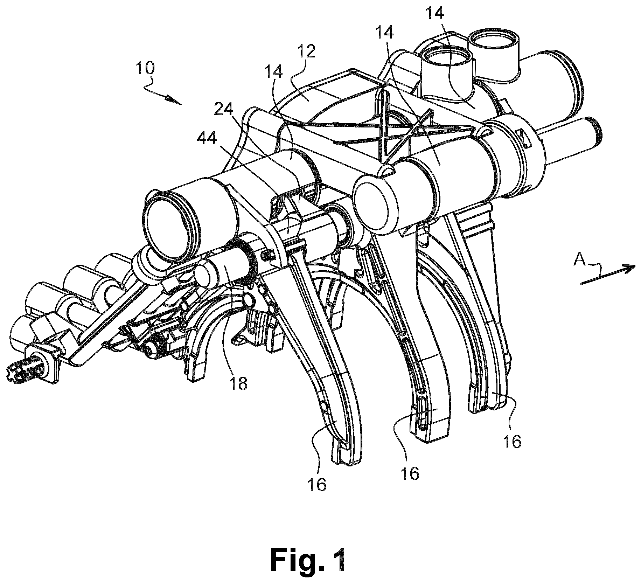

Figure 1 shows a gear-change selector module 10 for a gearshift of a motor vehicle, which has a housing 12 with actuators 14 and several shift forks 16 which can be moved by means of the actuators 14 in the axial direction A on a shaft 18 of the gear-change selector module 10.

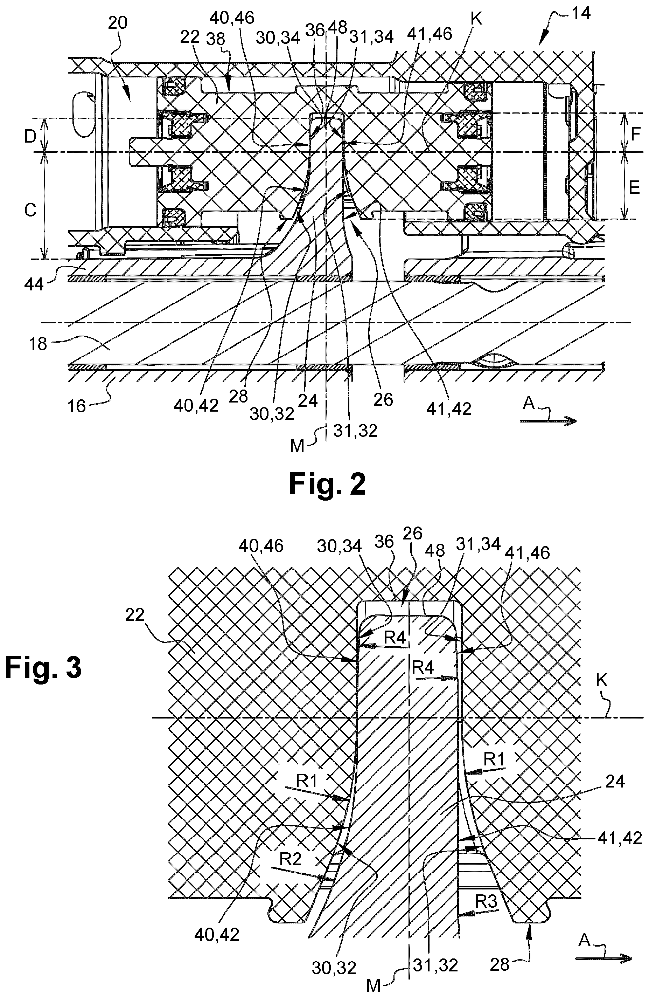

The actuators 14 each have a receiver 20 (see figure 2) and a movable element 22 which is mounted in the receiver 20 so as to be movable both in and against the axial direction A.

The actuators 14 are here each coupled to one of the shift forks 16 via a carrier arm 24 of the shift fork 16, which engages radially in a recess 26 in the movable element 22.

In the present embodiment, the actuators 14 are hydraulic cylinders, the movable elements 22 are accordingly actuator pistons, and the receivers 20 are piston receivers.

In an alternative embodiment, the actuators may be electro-mechanically operated. In this case, the movable elements 22 are e.g. actuating elements, and the receivers 20 are guides in which the actuating elements are guided accordingly.

With reference to figures 2 and 3, which each show a section through the centre axis K of the movable element 22 and the centre axis M of the recess 26, it is explained below how the coupling is configured using the example of an actuator-shift fork pair 14, 16.

The recess 26 extends from an outside 28 of the movable element 22 facing the shift fork 16 radially into the movable element 22, and beyond the centre axis K of the movable element 22.

The recess 26 here has two actuating faces 30, 31 which lie opposite one another in the axial direction A and each extend in a first portion 32 from the outside 28 up to the centre axis K, and in a second portion 34 from the centre axis K up to an end 36 of the recess 26.

In the present exemplary embodiment, the end 36 is formed by a base of the recess 26. In an alternative embodiment, the end 36 may be designed arbitrarily, for example as an opening on the outside 38 of the movable element 22 facing away from the shift fork 16.

The first portion 32 here transforms constantly into the second portion 34, i.e. without a jump or step and without forming an edge.

Furthermore, the first portion 32 of the actuating faces 30, 31 is formed convex and in each case extends with a radius R1 of 22 mm from the outside 28 up to the centre axis K.

In an alternative embodiment, only a part of the first portion 32 of the actuating faces 30, 31 may be formed convex, for example if a chamfer is provided at the transition to the outside 28.

In all embodiments, the actuating faces 30, 31 are however formed convex in the first portion 32, i.e. at least in a portion of the first portion 32.

Furthermore, in a further embodiment, the radius R1 may be of any size. Preferably however, the radius R1 is less than 50 mm or between 10 mm and 34 mm, in particular between 20 mm and 24 mm.

In the present exemplary embodiment, the second portion 34 of the actuating faces 30, 31 is flat and extends perpendicularly to the centre axis K, from the centre axis K up to the end 36 of the recess 26.

In an alternative embodiment, only a part of the second portion 34 of the actuating faces 30, 31 may be formed flat.

In principle, the actuating faces 30, 31 may be configured differently from one another. For example, in one embodiment, the radius R1 of the actuating face 30 may differ from the radius R1 of the actuating face 31.

The edges which form the transition between the actuating faces 30, 31 and the end 36 of the recess 26 here have a rounding, but this is not significant for the coupling function.

The carrier arm 24 has two carrier faces 40, 41, which are arranged opposite one another in the axial direction A and each lie opposite one of the actuating faces 30, 31 in the recess 26 and cooperate therewith when the movable element 22 is moved in or against the axial direction A, in order to actuate the shift fork 16 and move this accordingly on the shaft 18.

The carrier faces 40, 41 here extend in the first portion 42 from a base body 44 of the shift fork 16 arranged outside the movable element 22, radially up to the centre axis K of the movable element 22, and in a second portion 46 from the centre axis K up to a free end 48 of the carrier arm 24.

The first portion 42 here transforms constantly into the second portion 46, i.e. without a jump or step and without forming an edge.

Furthermore, here the first portion 42 of the carrier face 40 is concave and extends with a radius R2 of 24 mm from the base body 44 to the centre axis K, while the first portion 42 of the carrier face 41 is concave and extends with a radius R3 of 200 mm from the base body 44 to the centre axis K.

In an alternative embodiment, only a part of the first portion 42 of the carrier faces 40, 41 may be formed concave.

In principle, the carrier faces 40, 41 may each be shaped arbitrarily in the first portion 42.

Preferably however, at least the carrier face 40 is formed concave in the first portion 42, i.e. at least in a portion of the first portion 42.

Furthermore, in a further embodiment, the radii R2, R3 may be of arbitrary size, in particular at least as great as the radius R1 of the correspondingly opposite actuating face 30, 31.

The second portion 46 of each carrier face 40, 41 is convex and extends with a radius R4 of 95 mm from the centre axis K up to the free end 48 of the carrier arm 24.

In an alternative embodiment, only a part of the second portion 46 of the carrier faces 40, 41 may be formed convex.

In all embodiments, the carrier faces 40, 41 are however formed convex in the second portion 46, i.e. at least in a portion of the second portion 46.

Furthermore, in a further embodiment, the radius R4 may be of any size. Preferably however, the radius R4 is less than 200 mm or between 50 mm and 140 mm, in particular between 90 mm and 100 mm.

In principle, the carrier faces 40, 41 may be configured differently from one another. For example, in one embodiment, the radius R4 of the carrier face 40 may differ from the radius R4 of the carrier face 41.

The edges which form the transition between the carrier faces 40, 41 and the free end 48 of the carrier arm 24 here have a rounding, which is provided however in addition to the convex portion of the second portion 46 and is of no further significance in particular for the coupling of the movable element 22 and the shift fork 16.

The ratio of the radial extent C of the first portion 42 to the radial extent D of the second portion 46, in the carrier faces 40, 41 of the present exemplary embodiment, is approximately 3 : 1, i.e. the first portion 42 is around three times as long as the second portion 46 in the radial direction.

In principle, the ratio of the radial extent C of the first portion 42 to the radial extent D of the second portion 46 may be of arbitrary amount.

In one embodiment, the radial extent C of the first portion 42 is maximum five times as great as the radial extent D of the second portion 46.

The ratio of the radial extent E of the first portion 32 to the radial extent F of the second portion 34, in the actuating faces 30, 31 of the present exemplary embodiment, is approximately 2 : 1, i.e. the first portion 32 is around twice as long as the second portion 34 in the radial direction.

In principle, the ratio of the radial extent E of the first portion 32 to the radial extent F of the second portion 34 may of arbitrary amount.

In one embodiment, the radial extent E of the first portion 32 is maximum three times as great as the radial extent F of the second portion 34.

On operation of the shift fork 16 in the axial direction A, the shift fork 16 lies with the carrier face 40 on the actuating face 30 of the movable element 22. Here, the force is transmitted from the movable element 22 to the shift fork 16 in the region of the centre axis K of the movable element 22 and in the direction of the centre axis K.

The same applies on operation of the shift fork against the axial direction A, in which the shift fork 16 lies with the carrier face 41 against the actuating face 31 of the movable element 22.

Even under high loads in which the carrier arm of the shift fork 16 deforms because of the unavoidable material elasticity, the curved actuating faces 30, 31 in connection with curved carrier faces 40, 41 guarantee that the carrier faces 40, 41 can roll on the actuating faces 30, 31 and hence the force is transmitted from the movable element 22 to the shift fork 16 in the region of the centre axis K.

In this way, tilt moments on the movable element 22 are reduced or avoided.

This provides a gear-change selector module 10 which ensures a defined coupling of the shift forks 16 to the movable elements 22 even under high load.

## Claims

1. Gear-change selector module (10) for a gearshift of a motor vehicle, with a housing (12) which has an actuator (14) and a shift fork (16) which can be moved by means of the actuator (14) in an axial direction (A) on a shaft (18) of the gear-change selector module (10), the actuator (14) has a receiver (20) and a movable element (22) mounted in the receiver (20) so as to be movable both in and against the axial direction (A), the actuator (14) is coupled to the shift fork (16) via a carrier arm (24) of the shift fork (16) which engages radially in a recess (26) in the movable element (22),
wherein the recess (26) extends from an outside (28) of the movable element (22) into this, beyond a centre axis (K) of the movable element in a direction perpendicular to the centre axis (K),
wherein the recess (26) has two actuating faces (30, 31) which lie opposite one another in the axial direction (A) and cooperate with carrier faces (40, 41) arranged on sides of the carrier arm (24) facing away from one another,
and wherein
viewed in a section running through the centre axis (K) of the movable element (22) and the centre axis (M) of the recess (26), the carrier faces (40, 41) each extend in a first portion (42) from a base body (44) of the shift fork (16) arrange outside the movable element (22), radially up to the centre axis (K) of the movable element (22), and in a second portion (46) from the centre axis (K) in the direction of a free end (48) of the carrier arm (24) protruding into the recess (26) beyond the centre axis (K) of the movable element (22), the carrier faces (40, 41) are convex in the second portion (46),
**characterized in that**
viewed in a section running through the centre axis (K) of the movable element (22) and a centre axis (M) of the recess (26), the actuating faces (30, 31) are each convex in a first portion (32) extending from the centre axis (K) in the direction of the outside of the movable element (22).

2. Gear-change selector module (10) according to claim 1, **characterized in that** viewed in a section running through the centre axis (K) of the movable element (22) and the centre axis (M) of the recess (26), the first portions (32) of the actuating faces (30, 31) each have a first radius (R1) of less than 50 mm.

3. Gear-change selector module (10) according to claim 2, **characterized in that** the first radius (R1) is between 10 mm and 34 mm, in particular between 20 mm and 24 mm.

4. Gear-change selector module (10) according to claim 2 or 3, **characterized in that** viewed in a section running through the centre axis (K) of the movable element (22) and the centre axis (M) of the recess (26), the first portions (42) of the carrier faces (40, 41) are each concave and have a radius (R2, R3) which is at least as great as the first radius (R1).

5. Gear-change selector module (10) according to any of the preceding claims, **characterized in that** viewed in a section running through the centre axis (K) of the movable element (22) and the centre axis (M) of the recess (26), the second portions (46) of the carrier faces (40, 41) each have a second radius (R4) of less than 200 mm.

6. Gear-change selector module (10) according to claim 5, **characterized in that** the second radius (R4) is between 50 mm and 140 mm, in particular between 90 mm and 100 mm.

7. Gear-change selector module (10) according to any of the preceding claims, **characterized in that** viewed in a section running through the centre axis (K) of the movable element (22) and the centre axis (M) of the recess (26), the actuating faces (30, 31) are each flat in a second portion (34) extending from the centre axis (K) away from the first portion (32) of the actuating faces (30, 31), in particular perpendicular to the centre axis (K) of the movable element (22).

8. Gear-change selector module (10) according to any of the preceding claims, **characterized in that** viewed in a section running through the centre axis (K) of the movable element (22) and the centre axis (M) of the recess (26), the centre axis (K) of the movable element (22) intersects the carrier faces (40, 41) such that the radial extent (C) of the first portion (42) of the carrier face (40, 41) amounts to maximum 500% of the radial extent (D) of the second portion (46) of the corresponding carrier face (40, 41).

9. Gear-change selector module (10) according to claim 7, **characterized in that** viewed in a section running through the centre axis (K) of the movable element (22) and the centre axis (M) of the recess (26), the centre axis (K) of the movable element (22) intersects the actuating faces (30, 31) such that the radial extent (E) of the first portion (32) of the actuating face (30, 31) in each case amounts to maximum 300% of the radial extent (F) of the second portion (34) of the corresponding actuating face (30, 31).

10. Gear-change selector module (10) according to claims 7 or 9, **characterized in that** viewed in a section running through the centre axis (K) of the movable element (22) and the centre axis (M) of the recess (26), each first portion (32, 42) of the actuating faces (30, 31) and carrier faces (40, 41) transforms into the second portion (34, 46) of the corresponding actuating face (30, 31) or carrier face (40, 41) without an edge or step.

## Patentansprüche

1. Schaltmodul (10) für eine Gangschaltung eines Kraftfahrzeugs, mit einem Gehäuse (12), das einen Aktuator (14) und eine Schaltgabel (16) aufweist, die mittels des Aktuators (14) in einer axialen Richtung (A) auf einer Welle (18) des Schaltmoduls (10) bewegbar ist, der Aktuator (14) eine Aufnahme (20) und ein in der Aufnahme (20) gelagertes bewegliches Element (22) aufweist, das sowohl in als auch entgegen der axialen Richtung (A) bewegbar ist, der Aktuator (14) ist über einen Trägerarm (24) der Schaltgabel (16), der radial in eine Aussparung (26) im beweglichen Element (22) eingreift, mit der Schaltgabel (16) gekoppelt,
wobei sich die Aussparung (26) von einer Außenseite (28) des beweglichen Elements (22) in dieses hinein, jenseits einer Mittelachse (K) des beweglichen Elements in einer Richtung senkrecht zur Mittelachse (K), erstreckt,
wobei die Aussparung (26) zwei Betätigungsflächen (30, 31) aufweist, die in axialer Richtung (A) einander gegenüberliegen und mit Trägerflächen (40, 41) zusammenwirken, die an einander abgewandten Seiten des Trägerarms (24) angeordnet sind,
und wobei, in einem Schnitt betrachtet, der durch die Mittelachse (K) des beweglichen Elements (22) und die Mittelachse (M) der Aussparung (26) verläuft, sich die Trägerflächen (40, 41) jeweils in einem ersten Abschnitt (42) von einem außerhalb des beweglichen Elements (22) angeordneten Grundkörper (44) der Schaltgabel (16) radial bis zur Mittelachse (K) des beweglichen Elements (22) erstrecken, und erstrecken sich in einem zweiten Abschnitt (46) von der Mittelachse (K) in Richtung eines freien Endes (48) des Trägerarms (24), das über die Mittelachse (K) des beweglichen Elements (22) hinaus in die Aussparung (26) hineinragt, wobei die Trägerflächen (40, 41) im zweiten Abschnitt (46) konvex sind,
**dadurch gekennzeichnet, dass** in einem Schnitt, der durch die Mittelachse (K) des beweglichen Elements (22) und eine Mittelachse (M) der Aussparung (26) verläuft, die Betätigungsflächen (30, 31) jeweils in einem ersten Abschnitt (32) konvex ausgebildet sind, der sich von der Mittelachse (K) in Richtung der Außenseite (28) des beweglichen Elements (22) erstreckt.

2. Schaltmodul (10) nach Anspruch 1, **dadurch gekennzeichnet, dass** in einem Schnitt, der durch die Mittelachse (K) des beweglichen Elements (22) und die Mittelachse (M) der Aussparung (26) verläuft, die ersten Abschnitte (32) der Betätigungsflächen (30, 31) jeweils einen ersten Radius (R1) von weniger als 50 mm aufweisen.

3. Schaltmodul (10) nach Anspruch 2, **dadurch gekennzeichnet, dass** der erste Radius (R1) zwischen 10 mm und 34 mm, insbesondere zwischen 20 mm und 24 mm, liegt.

4. Schaltmodul (10) nach Anspruch 2 oder 3, **dadurch gekennzeichnet, dass** in einem Schnitt, der durch die Mittelachse (K) des beweglichen Elements (22) und die Mittelachse (M) der Aussparung (26) verläuft, die ersten Abschnitte (42) der Trägerflächen (40, 41) jeweils konkav sind und einen Radius (R2, R3) aufweisen, der mindestens so groß ist wie der erste Radius (R1).

5. Schaltmodul (10) nach einem der vorstehenden Ansprüche, **dadurch gekennzeichnet, dass** in einem Schnitt, der durch die Mittelachse (K) des beweglichen Elements (22) und die Mittelachse (M) der Aussparung (26) verläuft, die zweiten Abschnitte (46) der Trägerflächen (40, 41) jeweils einen zweiten Radius (R4) von weniger als 200 mm aufweisen.

6. Schaltmodul (10) nach Anspruch 5, **dadurch gekennzeichnet, dass** der zweite Radius (R4) zwischen 50 mm und 140 mm, insbesondere zwischen 90 mm und 100 mm, liegt.

7. Schaltmodul (10) nach einem der vorstehenden Ansprüche, **dadurch gekennzeichnet, dass** in einem Schnitt, der durch die Mittelachse (K) des beweglichen Elements (22) und die Mittelachse (M) der Aussparung (26) verläuft, die Betätigungsflächen (30, 31) jeweils in einem zweiten Abschnitt (34) flach sind, der sich von der Mittelachse (K) weg vom ersten Abschnitt (32) der Betätigungsflächen (30, 31) erstreckt, insbesondere senkrecht zur Mittelachse (K) des beweglichen Elements (22).

8. Schaltmodul (10) nach einem der vorstehenden Ansprüche, **dadurch gekennzeichnet, dass** in einem Schnitt, der durch die Mittelachse (K) des beweglichen Elements (22) und die Mittelachse (M) der Aussparung (26) verläuft, die Mittelachse (K) des beweglichen Elements (22) die Trägerflächen (40, 41) derart schneidet, dass die radiale Ausdehnung (C) des ersten Abschnitts (42) der Trägerfläche (40, 41) maximal 500 % der radialen Ausdehnung (D) des zweiten Abschnitts (46) der entsprechenden Trägerfläche (40, 41) beträgt.

9. Schaltmodul (10) nach Anspruch 7, **dadurch gekennzeichnet, dass** in einem Schnitt, der durch die Mittelachse (K) des beweglichen Elements (22) und die Mittelachse (M) der Aussparung (26) verläuft, die Mittelachse (K) des beweglichen Elements (22) die Betätigungsflächen (30, 31) derart schneidet, dass die radiale Ausdehnung (E) des ersten Abschnitts (32) der Betätigungsfläche (30, 31) jeweils maximal 300 % der radialen Ausdehnung (F) des zweiten Abschnitts (34) der entsprechenden Betätigungsfläche (30, 31) beträgt.

10. Schaltmodul (10) nach Anspruch 7 oder 9, **dadurch gekennzeichnet, dass** in einem Schnitt, der durch die Mittelachse (K) des beweglichen Elements (22) und die Mittelachse (M) der Aussparung (26) verläuft, jeder erste Abschnitt (32, 42) der Betätigungsflächen (30, 31) und Trägerflächen (40, 41) ohne Kante oder Stufe in den zweiten Abschnitt (34, 46) der entsprechenden Betätigungsfläche (30, 31) oder Trägerfläche (40, 41) übergeht.

## Revendications

1. Module de sélection de rapport (10) pour un levier de vitesses d'un véhicule automobile, comprenant un boîtier (12) qui comporte un actionneur (14) et une fourchette de sélection (16) pouvant être déplacée au moyen de l'actionneur (14) dans une direction axiale (A) sur un arbre (18) du module de sélection de rapport (10), l'actionneur (14) comporte un logement (20) et un élément mobile (22) monté dans le logement (20) de manière à pouvoir se déplacer à la fois dans la direction axiale (A) et dans le sens opposé à celle-ci, l'actionneur (14) est couplé à la fourchette de sélection (16) par l'intermédiaire d'un bras de support (24) de la fourchette de sélection (16) qui s'engage radialement dans un évidement (26) de l'élément mobile (22),
dans lequel l'évidement (26) s'étend depuis une face extérieure (28) de l'élément mobile (22) vers l'intérieur de celui-ci, au-delà d'un axe central (K) de l'élément mobile, dans une direction perpendiculaire à l'axe central (K),
dans lequel l'évidement (26) présente deux faces d'actionnement (30, 31) qui se font face dans la direction axiale (A) et coopèrent avec des faces de support (40, 41) disposées sur des côtés opposés du bras de support (24),
et dans lequel, vu en coupe passant par l'axe central (K) de l'élément mobile (22) et l'axe central (M) de l'évidement (26), les faces de support (40, 41) s'étendent chacune, dans une première partie (42), depuis un corps de base (44) de la fourchette de sélection (16) disposé à l'extérieur de l'élément mobile (22), radialement jusqu'à l'axe central (K) de l'élément mobile (22), et, dans une deuxième partie (46), à partir de l'axe central (K) en direction d'une extrémité libre (48) du bras de support (24) faisant saillie dans l'évidement (26) au-delà de l'axe central (K) de l'élément mobile (22), les faces de support (40, 41) sont convexes dans la deuxième partie (46),
**caractérisé en ce que**, vu en coupe passant par l'axe central (K) de l'élément mobile (22) et un axe central (M) de l'évidement (26), les faces d'actionnement (30, 31) sont chacune convexes dans une première partie (32) s'étendant depuis l'axe central (K) en direction de l'extérieur (28) de l'élément mobile (22).

2. Module de sélection de rapport (10) selon la revendication 1, **caractérisé en ce que**, vu en coupe passant par l'axe central (K) de l'élément mobile (22) et l'axe central (M) de l'évidement (26), les premières parties (32) des faces d'actionnement (30, 31) présentent chacune un premier rayon (R1) inférieur à 50 mm.

3. Module de sélection de rapport (10) selon la revendication 2, **caractérisé en ce que** le premier rayon (R1) est compris entre 10 mm et 34 mm, en particulier entre 20 mm et 24 mm.

4. Module de sélection de rapport (10) selon la revendication 2 ou 3, **caractérisé en ce que**, vu en coupe passant par l'axe central (K) de l'élément mobile (22) et l'axe central (M) de l'évidement (26), les premières parties (42) des faces de support (40, 41) sont chacune concaves et présentent un rayon (R2, R3) qui est au moins aussi grand que le premier rayon (R1).

5. Module de sélection de rapport (10) selon l'une quelconque des revendications précédentes, **caractérisé en ce que**, vu en coupe passant par l'axe central (K) de l'élément mobile (22) et l'axe central (M) de l'évidement (26), les deuxièmes parties (46) des faces de support (40, 41) présentent chacune un deuxième rayon (R4) inférieur à 200 mm.

6. Module de sélection de rapport (10) selon la revendication 5, **caractérisé en ce que** le deuxième rayon (R4) est compris entre 50 mm et 140 mm, en particulier entre 90 mm et 100 mm.

7. Module de sélection de rapport (10) selon l'une quelconque des revendications précédentes, **caractérisé en ce que**, vu en coupe passant par l'axe central (K) de l'élément mobile (22) et l'axe central (M) de l'évidement (26), les faces d'actionnement (30, 31) sont chacune planes dans une deuxième partie (34) s'étendant à partir de l'axe central (K) à l'opposé de la première partie (32) des faces d'actionnement (30, 31), en particulier perpendiculairement à l'axe central (K) de l'élément mobile (22).

8. Module de sélection de rapport (10) selon l'une quelconque des revendications précédentes, **caractérisé en ce que**, vu en coupe passant par l'axe central (K) de l'élément mobile (22) et l'axe central (M) de l'évidement (26), l'axe central (K) de l'élément mobile (22) coupe les faces de support (40, 41) de telle sorte que l'étendue radiale (C) de la première partie (42) de la face de support (40, 41) s'élève au maximum à 500 % de l'étendue radiale (D) de la deuxième partie (46) de la face de support correspondante (40, 41).

9. Module de sélection de rapport (10) selon la revendication 7, **caractérisé en ce que**, vu en coupe passant par l'axe central (K) de l'élément mobile (22) et l'axe central (M) de l'évidement (26), l'axe central (K) de l'élément mobile (22) coupe les faces d'actionnement (30, 31) de telle sorte que l'étendue radiale (E) de la première partie (32) de la face d'actionnement (30, 31) s'élève dans chaque cas à 300 % au maximum de l'étendue radiale (F) de la deuxième partie (34) de la face d'actionnement correspondante (30, 31).

10. Module de sélection de rapport (10) selon les revendications 7 ou 9, **caractérisé en ce que**, vu en coupe passant par l'axe central (K) de l'élément mobile (22) et l'axe central (M) de l'évidement (26), chaque première partie (32, 42) des faces d'actionnement (30, 31) et des faces de support (40, 41) se prolonge sans arête ni gradin par la deuxième partie (34, 46) de la face d'actionnement (30, 31) ou de la face de support (40, 41) correspondante.
